(19) Europäisches Patentamt

European Patent Office

Office européen des brevets

(11) **EP 0 554 958 B1**

(12) **EUROPEAN PATENT SPECIFICATION**

(45) Date of publication and mention
of the grant of the patent:
**09.10.1996 Bulletin 1996/41**

(51) Int Cl.$^6$: **G01N 27/90**

(21) Application number: **93200296.7**

(22) Date of filing: **04.02.1993**

(54) **Apparatus and method for pipe or tube inspection**

Methode und Vorrichtung zur Inspektion von Rohren

Méthode et appareil pour l'inspection des tubes

(84) Designated Contracting States:
**DE GB NL**

(30) Priority: **05.02.1992 EP 92200332**

(43) Date of publication of application:
**11.08.1993 Bulletin 1993/32**

(73) Proprietor: **SHELL INTERNATIONALE
RESEARCH MAATSCHAPPIJ B.V.
2596 HR Den Haag (NL)**

(72) Inventors:
• **Van den Berg, Wilhelmus Hendrikus
NL-6827 AT Arnhem (NL)**
• **Van de Schepop, Petrus Wilhelmus Maria
NL-6827 AT Arnhem (NL)**
• **Van der Steen, Johan
NL-6827 AT Arnhem (NL)**

(56) References cited:
**EP-A- 0 152 687          EP-A- 0 255 619
EP-A- 0 370 691          DE-A- 2 949 828**

## Description

The present invention relates to an apparatus and method for pipe inspection. In particular, the invention relates to an apparatus and method for internal diameter profiling of pipes or tubes using the high frequency eddy current technique. In the following this technique will be referred to as the HFEC technique.

For example, the invention is suitably applicable to an internal diameter profiling of small diameter pipelines transporting gas.

Marginal fields will only then be exploited when cost effective operation is feasible. The use of cheaper materials for pipelines transporting unprocessed gas is an attractive option to make such operations economically feasible. Progress made in the prediction and control of corrosion rates of carbon steel pipelines have opened the door for use of lower cost materials resulting in significant reduction of capital investment. The effectiveness of corrosion control along the total length of these pipelines needs to be verified on a regular basis in order to be able to take appropriate corrective action in an early stage. Corrective action can for example be to increase the amount of applied inhibitor and/or decrease the gas inlet temperature in order to adjust the corrosion rate to an acceptable level in view of the required remaining life of the pipeline. On the other hand, it might be economically attractive to modify the operation conditions in case the actual corrosion rate is far below what is required in view of remaining service life.

For these marginal fields therefore it is attractive to use small diameter pipes (i.e. 4-8 inches (10-20 cm)) with a relatively heavy wall thickness constructed from carbon steel pipes. For checking the effectiveness of corrosion control it is considered essential to detect and quantify internal general corrosion and pits. Early and accurate detection and monitoring of corrosion requires a full circumferential coverage of the inner pipewall by sensors and there is a need for an on-stream pipeline inspection tool (intelligent pig) for this inspection task. Several Non-Destructive Techniques (NDT) can be applied for this inspection task, viz.:

(a) Magnetic flux;
(b) Ultrasonic wall thickness measurement;
(c) Ultrasonic internal diameter profiling (airborne);
(d) Remote field eddy current;
(e) Optical profilometry;
(f) Mechanical calipering;
(g) High frequency eddy current (HFEC) profiling.

### Ad. (a)

Magnetic flux pigs are being applied for several decades to inspect pipelines on stream. This type of tool is available in sizes of 4 inch and larger and is especially suited for corrosion detection. However, for given application this type of tool is not applicable in view of its maximum wall thickness limit (in the order of 5% of the lines diameter) and insufficient sizing accuracy.

### Ad. (b)

Ultrasonic tools for the inspection of pipelines are available in sizes of 8 inch (20 cm) and larger. These tools accurately measure the remaining wall thickness of the line by use of ultrasonic transducers mounted in standoff. However, these tools require a liquid coupling between transducer and pipewall, which complicates the application in gas transporting lines. Furthermore, miniaturization of this type of tool is difficult.

### Ad. (c)

Ultrasonic (airborne) profiling of a pipeline is in principle possible by making use of a relatively low frequency in order to prevent unacceptable attenuation of wave propagating from transducer to pipewall and back. However, detection of localized corrosion (pitting) is not feasible since the beam of low frequency ultrasonic transducers can not be sufficiently focused.

### Ad. (d)

Remote field eddy current technique is not feasible for this type of application since low frequencies are to be used which limit the inspection speed of the tool to below 0.5 m/s. Furthermore, is the resolution of the tool poor and not considered fit for measurement of localized corrosion.

### Ad. (e)

Optical techniques can be used to accurately measure distances. The main drawback of application of this technique in an intelligent pig is the presence of any debris and/or condensate will cause disturbing light reflections. Therefore, this technique is not considered feasible for use in on-stream inspection tools.

### Ad. (f)

Mechanical calipers are used extensively for downhole inspection. For given inspection problem the use of mechanical calipers is not preferred since they provide a poor coverage for detection of localized corrosion and require a relatively low inspection speed.

### Ad. (g)

The high frequency eddy current (HFEC) technique can be used for diameter profiling of carbon steel tubes. Originally this technique was developed to measure the internal diameter and profile of heat exchanger tubes. This technique can be used to measure the internal diameter profile of a pipe or tube and has good detection capabilities for localized corrosion. This technique is tolerant to the presence of debris and condensate and allows inspection speeds up to many metres per second. However, it should be realized that no external corrosion will be detected since the penetration of the eddy currents is limited.

It is an object of the invention to provide an apparatus and a method for internal diameter profiling of small diameter (i.e. 4-8 inches (10-20 cm)), pipes or tubes using the high frequency eddy current technique which fulfils an existing need in pipe inspection and is more suitable for this inspection task than available tools/techniques.

The invention therefore provides an apparatus for measuring the internal profile of a small diameter pipe comprising a plurality of flexibly suspended local probes mounted on a flexible sensor carrier which is adapted to move through the pipe to be inspected and comprising receiver and transmitter coils and which local probes are kept in close contact with the pipewall, said local probes measuring the distance between probe and actual pipewall by means of high frequency eddy current technique, and further comprising at least one global coil fixedly mounted to the centre of the sensor carrier which global coil(s) is (are) used for measuring the distance from the centre of the said carrier to the local probes, and means for deriving from the data thus obtained, information on the internal diameter profile.

The invention further provides a method for measuring the internal profile of a small diameter pipe comprising the steps of locating a plurality of flexibly suspended local probes mounted on a flexible sensor carrier which is moving through the pipe, and keeping the local probes in close contact with the pipewall; said local probes measuring the distance between the said local probes and the actual pipewall by means of the high frequency eddy current technique; locating at least one global coil fixedly mounted to the centre of the said sensor carrier and measuring the distance from the centre of the said carrier to the local probes, and deriving from the data thus obtained information on the internal diameter profile.

According to the invention a high test frequency is applied in combination with an appropriate calibration procedure to achieve dimensional data which are not disturbed by local variations of material properties.

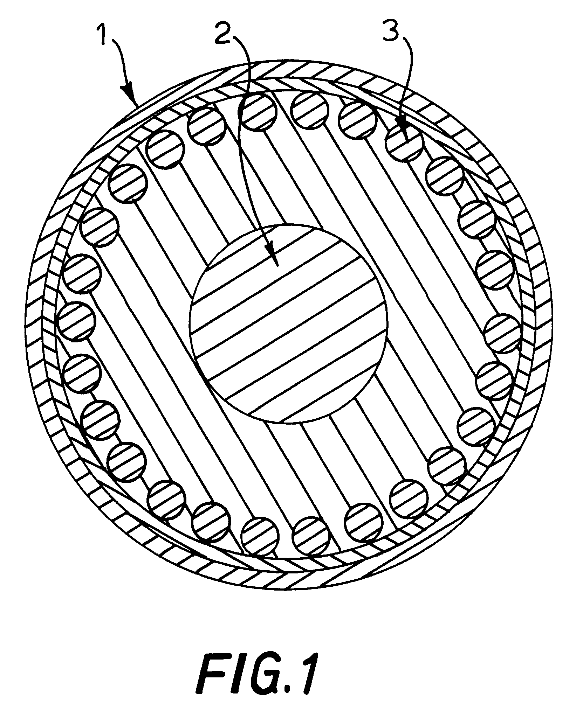

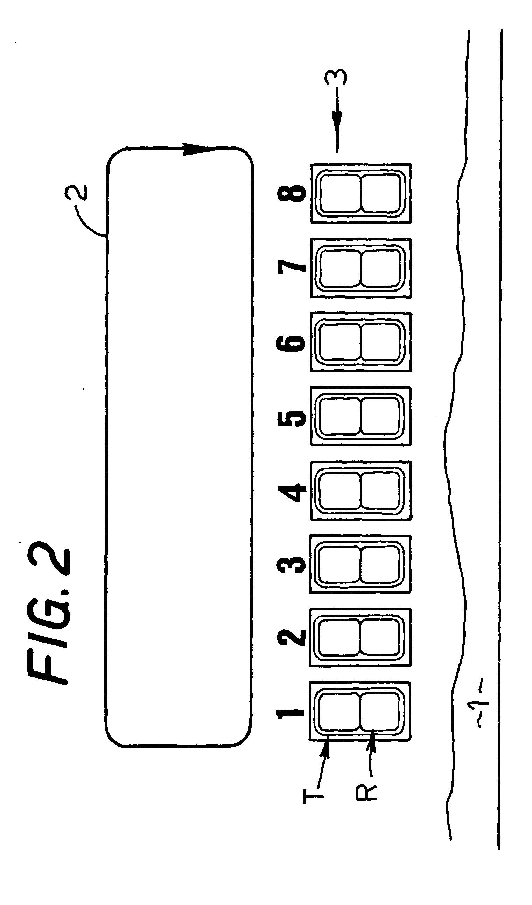

The invention will now be described by way of example in more detail by reference to the accompanying drawings, in which: Fig. 1 represents schematically the principle of the invention; and Fig. 2 represents schematically the technique used for the determination of the internal pipe profile.

Referring to Fig. 1 a pipe 1 has been shown in cross-section. An on-stream pipe inspection tool (intelligent pig) is moving through the pipe.

Such an inspection tool comprises a sensor carrier (not shown for reasons of clarity) to which a first or global coil 2 is fixed in any way suitable for the purpose.

Further, a plurality of local probes 3 is flexibly suspended in any suitable mechanical manner to the sensor carrier.

Internal diameter profiling can be achieved by the HFEC technique by measuring the distance between a coil and the actual pipewall. For use of this technique in an intelligent pig for the inspection of small diameter pipes a combination of local probes and global coils is used. The combination of local probes and global coils is required to be able to detect and size small pits and to simultaneously achieve a pig with sufficient flexibility (approximately +/- 10% of nominal ID) to allow passage of bends and internal diameter reductions (e.g. dents and heavy wall sections) which can be encountered in an actual pipe.

Local probes are mounted on the flexible sensor carrier and distributed in the circumference of the pipe. Local probes are used to measure the distance to the pipewall. The local probes are suspended such that they are kept in close contact with the pipewall (e.g. within 8 mm). Readings of the local probes will provide information on localized corrosion. A large global coil fixedly mounted to the centre of the sensor carrier is used to measure the distance from centre of the carrier to the distributed local probes. The combination of measurements from local probes and global coils will provide the internal diameter profile of the pipe from which both pitting and general corrosion can be detected and sized.

To obtain a tool with good detection capabilities a large number of local probes are used in order to obtain a 100% circumferential coverage for relevant pits. Advantageously, approximately 2 local probes are applied for each cm of pipe circumference. A single global coil is used to measure the distances between local probes and the centre of the sensor carrier. The shape of the local probes is determined such to achieve an optimum combination of pit detection capabilities (circumferential and axial resolution) and maximum lift off measuring range.

Internal diameter profiling can in principle be used to measure both general and localized corrosion types in a pipe. For given application, detection thresholds of 1 mm are specified for both general and localized corrosion detection capabilities. For localized corrosion this is not considered to be a problem, since the sound material beside a pit can be used as a local reference for depth measurement. For larger corrosion areas the ideal reference would be the axis of the pipe with respect to the outside surface, but unfortunately this reference is not readily available. The only available reference is the axis of the pig itself. But the axes of pig and pipe do not necessarily coincide, since the pig can be placed eccentric. This eccentricity should as far as possible be minimized by providing a good guidance to the sensor carrier. The eccentricity causes a sine-wave signal with a period of one circumference which is superimposed on the radius of the tube. The eccentricity can be estimated from the measured radii in the circumference and be used to suppress the disturbing sine-wave eccentricity signal. The average internal radius (or diameter) can be used as a measure for (purely) general corrosion. However, a small systematic error (0.2 mm for 5% eccentricity in a 6 inch pipe) is made as a result of eccentricity of the probe. If required this systematic error can be corrected for using the estimated eccentricity value.

It should be realized that the HFEC measurement results do reveal the internal diameter profile only, but can not indicate remaining wall thickness. For example in case of general corrosion/erosion it will in principle not be possible to determine from the measured profile whether the corrosion is equally distributed in the circumference or preferential on one side of the pipe.

It is proposed to present local data in an eccentricity corrected form against position and circumference of the pipe together with line curves against position indicating average, maximum and minimum internal diameter (or radius) and eccentricity. Optionally, also ovality of a pipe can be calculated, since ovality dominates the sine-wave component with period of half the circumference. It is anticipated that besides sections suffering general corrosion damage also bends, dents and other diameter reductions are clearly recognized in the plots of average, maximum and minimum diameter and eccentricity versus position.

The operation of the apparatus is as follows:

A (transmitter) coil carrying an alternating current placed in proximity of an electrical conducting object induces eddy currents in this object. These induced eddy currents can be detected by a (receiver) coil over which the voltage is measured. Alternatively, a single coil can be used for both transmission and reception by measuring the coil's impedance. However, separate transmitter and receiver coils have the advantage that coils can be shaped differently in order to reduce the direct coupling and hence improve the sensitivity to the parameters of interest. An additional advantage is that separate transmitter/receiver coils are inherently insensitive to temperature variations and will hence be more stable. For the inspection of ferromagnetic materials with eddy currents a special approach is required, since:

(a) local variations in the magnetic permeability of the ferromagnetic material causes disturbing signals;
(b) the high magnetic permeability of ferromagnetic materials severely limits the penetration depth of the eddy currents. Consequently, it is not possible to detect external defects, since this would require the use of unacceptable low test-frequencies (sensitivity reduces at lower frequencies).

The HFEC technique is a special approach, which suppresses the effect of disturbing magnetic permeability changes by use of a high test-frequency, while accepting the fact that only the near surface is inspected. It was found that at higher test-frequencies the influence of material property variations reduces with respect to the signals generated by variations of distance between coil and pipewall (called lift-off).

Eddy current data is two-dimensional and provides either amplitude and phase or vertical and horizontal components. For the HFEC technique, the phase of the eddy current system is adjusted such that material property variations cause signals in the horizontal direction only. The vertical component (which then is free of material property signals) will then be used to estimate lift-off. It is found that even material property variations as large as the difference between carbon steel and stainless steel do not cause significant vertical deflections. The plot of vertical component versus lift-off, is found to be highly a-linear. An asymptote is found for the vertical component as lift-off goes to infinity. At larger lift-off values the coil becomes less and less sensitive to lift-off variations. It was found that the curve of lift-off versus measured vertical component can be fitted well with a tangents function. To this end it is attractive to normalize the measured vertical component (Vm) using the vertical components at zero lift-off (V0) and infinite lift-off (V1), respectively.

$$Vn = (Vm-V0)(V1-V0) \qquad (1)$$

The normalized measured vertical component (Vn) runs from 0 to 1 for the lift-off going from zero to infinity. The measured lift-off (L) can now be calculated from the normalized measured vertical component using the tangent function shown in equation 2.

$$L = A.\tan(B.Vn) \qquad (2)$$

The parameters A and B in this tangent function will be determined using a least squares algorithm (for the normalized vertical component) from calibrations readings at known lift-off values over the full range of interest. The range over which the tangent fit can effectively be used is limited due to noise and drift in the measured eddy current data. A small error in a normalized vertical reading close to 1 yields a large error in estimated lift-off. Therefore, the effective measuring range that can be used goes from O to X, where X is a value smaller than 1 (e.g. 0.95) which depends on the quality of the instrumentation.

For a coil with given dimensions and type only a limited lift-off measuring range can be achieved. The larger the coil the higher the lift-off measuring range. However, larger coils provide a poorer pit detection capability and a trade off has to be made. As a rule of thumb the dimensions of the smallest pit that can be measured will be of the same order of magnitude as the dimensions of the coil. Coils capable of measuring the pits of interest for given application have a too small measuring range to mount them fixedly to the sensor carrier of the pig in view of the required flexibility to pass bends, dents, T-joints, heavy wall sections, etc. which can be part of the pipeline. Therefore, a second type of coil is introduced, global coil, which measures the distance between the sensor carrier and the flexibly distributed local probes. This two stage approach provides both good pit detection capabilities and sufficient flexibility of the tool.

To measure the distance between local probes and global coils the local probes can be used as transmitter coil and the global coil as receiver or vice versa. Since the direct coupling between the coils is measured this measurement is not significantly affected by the presence and material properties of the pipe. Hence, there is no need to rotate the eddy current signal to suppress disturbing material properties, nor is the variation between local probes and pipewall affecting this measurement. The phase of the eddy current signal is not critical and should preferably be adjusted to maximize the measured component. This component is again normalized and converted to distance values by means of a tangent function or other types of function.

Fig. 2 shows schematically a global coil 2 and a plurality of local probes 3. In Fig. 2 eight local probes have been represented. Each local probe 3 comprises a transmitter T and a receiver R and is located in close proximity to the pipewall 1 represented in longitudinal section.

As already described in the foregoing, local probes are used to measure the distance to the pipe surface. Especially, the capability of a local probe to detect pits of a certain size is important. After detection the depth, length and width of a detected pit need to be evaluated from the measured signals.

Local probes of different types and in different sizes have been tested to determine their capabilities in view of:

- useful lift-off measuring range;
- pit detection;
- pit depth sizing;
- pit length sizing;
- circumferential coverage.

The latter is of importance, since the larger the number of coils required to achieve sufficient coverage, the more complex the HFEC pig will be. The capabilities of a certain coil depend primarily on its type and macroscopic size. The number of turns of a coil should be such to match the used instrumentation at the frequency of interest, but will not dominate the coils measurement performance as long as the used number of turns and wire thickness does not change the macroscopic coil size.

An advantageous embodiment of the invention comprises a large circular or segmental global coil 110 mm (length) x 40 mm (diameter) which is used in combination with local probes comprising separate transmitter and receiver coils.

In case of segmental global coils, these segmental global coils together provide either full or partly coverage of the pipe circumference.

In Fig. 2 the transmitter coil T has a rectangular shape and has its axis parallel with the surface to be inspected. The receiver coil R is wound inside the transmitter coil and has the shape of an "8" to minimize the effect of direct coupling between transmitter and receiver.

The local probes, measuring lift-off to the pipewall, are scanned sequentially, while the global coil measures simultaneously the distance to the active local coil.

The local probes are advantageously mounted in sheet of polyurethane in a staggered way to achieve sufficient coverage to detect pits with a surface diameter exceeding 10 mm with at least two probes.

The single global coil (advantageously 40 windings) is also advantageously mounted on a flexible polyurethane sheet in order to simulate variations between the centre of the sensor carrier (on which the global coil will be mounted) and the pipe wall, e.g. during passage of a bend or internal diameter variation.

It will be appreciated by those skilled in the art that a circular global coil can be used on transmitter in combination with the transmitter coil of a local probe operated as receiver to perform global distance measurements.

It will further be appreciated by those skilled in the art that a segmental global coil can be used as receiver in combination with the transmitter coil of a local probe operated as transmitter to perform global distance measurement.

Each local probe is calibrated individually. The measured eddy current signals are rotated (to minimize material property influences) and converted to lift-off values using a tangent function. The rotation angle and fit coefficients of the tangent function are determined (calibration) for each coil individually. To this end the multi-coil probe is positioned on sheets of synthetic material with known thickness placed on plates of carbon steel and austenitic stainless steel, respectively.

Further, each combination of a local probe with the global coil is calibrated individually, to convert eddy current values to global distance using a tangent or other type of fit function.

The coefficients of this fit function are determined for each combination of a local probe with the global coil individually by adjustment of global distance to a series of preset values.

It will be appreciated by those skilled in the art that the internal profiling technique of the invention is not restricted to pipe inspection as for example applicable in pipelines but can also suitably be applied in inspection of tubing and casing, furnace tubes, heat exchanger tubes and the like.

Various modifications of the present invention will become apparent to those skilled in the art from the foregoing description. Such modifications are intended to fall within the scope of the appended claims.

## Claims

1. An apparatus for measuring the internal profile of a small diameter pipe (1) comprising a plurality of flexibly suspended local probes (3) mounted on a flexible sensor carrier which is adapted to move through the pipe to be inspected and comprising receiver and transmitter coils and which local probes are kept in close contact with the pipewall, said local probes measuring the distance between probe and actual pipewall by means of high frequency eddy current technique, and further comprising at least one global coil (2) fixedly mounted to the centre of the sensor carrier which global coil(s) is (are) used for measuring the distance from the centre of the said carrier to the local probes, and means for deriving from the data thus obtained, information on the internal diameter profile.

2. The apparatus as claimed in claim 1 wherein the plurality of local probes is located at the circumference of the pipewall.

3. The apparatus as claimed in claim 1 or 2 wherein the local probes comprise separate transmitter and receiver coils.

4. The apparatus as claimed in claim 3 wherein the transmitter coil has a rectangular shape and has its axis parallel with the surface to be inspected.

5. The apparatus as claimed in claim 3 or 4 wherein the receiver coil is wound inside the transmitter coil and has the shape of an "8".

6. The apparatus as claimed in claim 4 or 5 wherein the height of the transmitter coil is 12 mm.

7. The apparatus as claimed in any one of claims 1-6 wherein the global coil is circular or segmental.

8. The apparatus as claimed in claim 7 wherein the dimensions of the global coil are 110 mm (length) x 40 mm (diameter).

9. The apparatus as claimed in claim 8 wherein the global coil comprises 40 windings.

10. The apparatus as claimed in any one of claims 1-9 wherein 8 local coils are combined with a single global coil.

11. The apparatus as claimed in any one of claims 1-10 wherein the local coils are located within 8 mm from the pipewall.

12. A method for measuring the internal profile of a small diameter pipe comprising the steps of locating a plurality of flexibly suspended local probes mounted on a flexible sensor carrier which is moving through the pipe, and keeping the local probes in close contact with the pipewall; said local probes measuring the distance between the said local probes and the actual pipewall by means of the high frequency eddy current technique; locating at least one global coil fixedly mounted to the centre of the said sensor carrier and measuring the distance from the centre of the said carrier to the local probes, and deriving from the data thus obtained information on the internal diameter profile.

## Patentansprüche

1. Vorrichtung zum Messen des Innenprofils eines Rohrs (1) mit kleinem Durchmesser, mit mehreren flexibel aufgehängten Nahsonden (3), die an einem flexiblen Sensorträger montiert sind, der sich durch das zu inspizierende Rohr bewegen kann, und mit Empfangs- und Sendespulen, wobei die Nahsonden in engem Kontakt mit der Rohrwand gehalten werden und wobei die Nahsonden die Entfernung zwischen Sonde und tatsächlicher Rohrwand mit Hilfe des Hochfrequenzwirbelstromverfahrens messen, und weiterhin mit mindestens einer an der Mitte des Sensorträgers festmontierten Globalspule (2), wobei die Globalspule bzw. die Globalspulen zum Messen der Entfernung von der Mitte des Trägers zu den Nahsonden verwendet wird bzw. werden, und Mitteln zum Gewinnen von Informationen über das Profil des Innendurchmessers aus den so gewonnenen Daten.

2. Vorrichtung nach Anspruch 1, wobei die mehreren Nahsonden sich am Umfang der Rohrwand befinden.

3. Vorrichtung nach Anspruch 1 oder 2, wobei die Nahsonden getrennte Sende- und Empfangsspulen umfassen.

4. Vorrichtung nach Anspruch 3, wobei die Sendespule eine rechteckige Form aufweist und ihre Achse parallel zu der zu inspizierenden Oberfläche liegt.

5. Vorrichtung nach Anspruch 3 oder 4, wobei die Empfangsspule innerhalb der Sendespule gewickelt ist und die Form einer "8" aufweist.

6. Vorrichtung nach Anspruch 4 oder 5, wobei die Höhe der Sendespule 12 mm beträgt.

7. Vorrichtung nach einem der Ansprüche 1-6, wobei die Globalspule kreisförmig oder segmentförmig ist.

**8.** Vorrichtung nach Anspruch 7, wobei die Abmessungen der Globalspule 110 mm (Länge) x 40 mm (Durchmesser) sind.

**9.** Vorrichtung nach Anspruch 8, wobei die Globalspule 40 Windungen umfaßt.

**10.** Vorrichtung nach einem der Ansprüche 1-9, wobei 8 Nahspulen mit einer einzelnen Globalspule kombiniert werden.

**11.** Vorrichtung nach einem der Ansprüche 1 bis 10, wobei die Nahspulen weniger als 8 mm von der Rohrwand weg angeordnet sind.

**12.** Verfahren zum Messen des Innenprofils eines Rohrs mit kleinem Durchmesser, mit den Schritten: Anordnen mehrerer flexibel aufgehängter Nahsonden, die an einem sich durch das Rohr bewegenden flexiblen Sensorträger montiert sind, und Halten der Nahsonden in engem Kontakt mit der Rohrwand; wobei die Nahsonden die Entfernung zwischen den Nahsonden und der tatsächlichen Rohrwand mit Hilfe des Hochfrequenzwirbelstromverfahrens messen; Anordnen mindestens einer an der Mitte des Sensorträgers festmontierten Global spule und Messen der Entfernung von der Mitte des Trägers zu den Nahsonden und Gewinnen von Informationen über das Profil des Innendurchmessers aus den so gewonnenen Daten.

**Revendications**

**1.** Appareil pour mesurer le profil intérieur d'un tuyau de petit diamètre (1) comprenant une pluralité de capteurs locaux (3) suspendus de manière flexible montée sur un support capteur flexible qui est adapté pour se déplacer à travers le tuyau à inspecter et comprenant des bobines réceptrices et émettrices et lesquels capteurs locaux sont maintenus en contact étroit avec la paroi du tuyau, lesdits capteurs locaux mesurant la distance entre capteur et paroi effective du tuyau au moyen d'une technique par courants de Foucault à haute fréquence, et comprenant en outre au moins une bobine globale (2) montée fixement au centre du support capteur, laquelle (lesquelles) bobines(s) globale(s) est (sont) utilisée(s) pour mesurer la distance entre le centre dudit support et les capteurs locaux, et un moyen pour déduire des informations sur le profil du diamètre intérieur à partir des données ainsi obtenues.

**2.** Appareil selon la revendication 1, dans lequel la pluralité de capteurs locaux est située sur la circonférence de la paroi du tuyau.

**3.** Appareil selon la revendication 1 ou 2, dans lequel les capteurs locaux comprennent des bobines réceptrice et émettrice séparées.

**4.** Appareil selon la revendication 3, dans lequel la bobine émettrice est de forme rectangulaire et a son axe parallèle à la surface à inspecter.

**5.** Appareil selon la revendication 3 ou 4, dans lequel la bobine réceptrice est enroulée à l'intérieur de la bobine émettrice et est en forme de "8".

**6.** Appareil selon la revendication 4 ou 5, dans lequel la hauteur de la bobine émettrice est de 12 mm.

**7.** Appareil selon l'une quelconque des revendications 1 à 6, dans lequel la bobine globale est circulaire ou segmentaire.

**8.** Appareil selon la revendication 7, dans lequel les dimensions de la bobine globale sont 110 mm (longueur) ´ 40 mm (diamètre).

**9.** Appareil selon la revendication 8, dans lequel la bobine globale comprend 40 spires.

**10.** Appareil selon l'une quelconque des revendications 1 à 9, dans lequel 8 bobines locales sont combinées à une seule bobine globale.

**11.** Appareil selon l'une quelconque des revendications 1 à 10, dans lequel les bobines locales sont situées à moins de 8 mm de la paroi du tuyau.

**12.** Méthode pour mesurer le profil intérieur d'un tuyau de petit diamètre comprenant les étapes consistant à placer une pluralité de capteurs locaux suspendus de manière flexible montée sur un support capteur flexible qui se déplace à travers le tuyau, et maintenir les capteurs locaux en contact étroit avec la paroi du tuyau; lesdits capteurs locaux mesurant la distance entre lesdits capteurs locaux et la paroi effective du tuyau au moyen d'une technique par courants de Foucault à haute fréquence; placer au moins une bobine globale montée fixement au centre dudit support et mesurer la distance entre le centre dudit support et les capteurs locaux, et déduire des informations sur le profil du diamètre intérieur à partir des données ainsi obtenues.

**FIG.1**

FIG.2